Europäisches Patentamt

European Patent Office

Office européen des brevets

(11) Numéro de publication: **0 223 695**
**B1**

(12) # FASCICULE DE BREVET EUROPEEN

(45) Date de publication du fascicule du brevet:
**11.10.89**

(51) Int. Cl.⁴: **F02M 31/06**

(21) Numéro de dépôt: **86402476.5**

(22) Date de dépôt: **05.11.86**

(54) Mélangeur d'air d'admission à commande à dépression à pilotage automatique.

(30) Priorité: **07.11.85 FR 8516498**
**25.02.86 FR 8602566**

(43) Date de publication de la demande:
**27.05.87 Bulletin 87/22**

(45) Mention de la délivrance du brevet:
**11.10.89 Bulletin 89/41**

(84) Etats contractants désignés:
**DE ES FR GB IT**

(56) Documents cités:
**DE-A- 3 014 389**
**FR-A- 2 154 186**
**FR-A- 2 202 233**

(73) Titulaire: **TECAFILTRES, Société Anonyme dite:, Tour**
**Corosa 44, avenue de Chatou,**
**F-92508 Reuil-Malmaison(FR)**

(72) Inventeur: **Noireaux, Marcel, 3d rue Eugène Varlin,**
**F-91270 Vigneux sur Seine(FR)**

(74) Mandataire: **Weinmiller, Jürgen et al,**
**Lennéstrasse 9 Postfach 24, D-8133 Feldafing(DE)**

ACTORUM AG

## Description

La présente invention concerne un mélangeur d'air d'admission à commande à dépression à pilotage automatique.

On sait que l'air admis au carburateur d'un moteur à explosion provient en général d'un mélangeur d'air froid et d'air chaud.

Au démarrage à froid d'un moteur, le mélangeur permet de n'admettre au carburateur que de l'air chaud prélevé au voisinage du collecteur d'échappement de la voiture.

Après un temps de fonctionnement permettant à l'air d'admission d'atteindre une température de consigne, le mélangeur reçoit un mélange d'air froid (air à la température extérieure à l'automobile) et d'air chaud. La proportion de l'un et l'autre air est obtenu au moyen d'un volet obturant plus ou moins la canalisation d'air chaud, et dont la position est réglée par un organe à dépression agissant en fonction de la dépression existant dans la tubulure d'admission. Cette dépression dépend de la charge demandée au moteur, donc de la position de l'accélérateur.

Lorsque la température de fonctionnement du moteur a atteint une autre température de consigne, le mélangeur doit obturer le conduit d'air chaud pour ne transmettre au carburateur que de l'air à la température ambiante.

On connaît, par le document FR-A 2 154 186, un tel mélangeur, dans lequel les températures de consigne qui commandent les divers modes de fonctionnement du mélangeur, sont mesurées au moyen de sondes à bilame.

Un premier inconvénient de l'emploi de bilames est qu'aucun réglage des températures de consigne n'est possible facilement. Si on veut donc fabriquer des mélangeurs pour divers types d'automobile dont les températures de fonctionnement sont différentes, il faudra disposer de plusieurs jeux de bilames, ce qui nécessite un approvisionnement onéreux. D'autre part, l'emploi de bilames nécessite l'utilisation de deux tubes de liaison pneumatique, d'une part de la tubulure d'admission vers les bilames et d'autre part, des bilames vers le mélangeur.

Un but de l'invention est de réaliser un mélangeur monobloc avec l'ensemble des clapets ne nécessitant plus qu'une seule liaison pneumatique avec la tubulure d'admission, et dans lequel, les températures de consigne sont aisément réglables par le constructeur.

Un deuxième inconvénient de l'emploi de bilames est que ces bilames ne peuvent être placés aux endroits où la température est la plus représentative de celle du moteur, comme l'huile du carter moteur ou l'eau de refroidissement de la culasse.

Un autre but de la présente invention est donc de réaliser un mélangeur dans lequel les sondes de températures peuvent être placées à tout endroit judicieusement choisi, assurant aussi une meilleure précision dans la commande du mélangeur et ainsi une meilleure combustion du carburant.

L'invention a pour objet un mélangeur d'air d'admission à commande à dépression à pilotage automatique pour un moteur à combustion interne à carburateur, comprenant un boîtier muni d'une tubulure d'entrée d'air frais, d'une tubulure d'entrée d'air chaud, d'une tubulure de sortie d'air mélangé et d'un volet susceptible de fermer l'arrivée d'air chaud ou l'arrivée d'air frais et, d'occuper toutes les positions intermédiaires, ledit volet étant actionné par une tige faisant partie d'un organe à dépression constituée d'une capsule délimitant un volume fermé par une membrane souple et poussée par un ressort, ladite tige étant solidaire de la membrane, l'intérieur dudit volume étant mis en communication avec la tubulure d'admission d'air du moteur à travers un clapet commandable, et comprenant des premiers moyens pour maintenir ouvert ledit clapet lorsque la température de l'air d'admission d'air au carburateur atteint une première valeur de seuil et des seconds moyens pour mettre le volume à la pression atmosphérique lorsque une température représentative de la température du moteur atteint une seconde valeur de seuil, caractérisé en ce que les premiers et les seconds moyens comprennent chacun un circuit électronique comportant une thermistance.

Selon un mode de réalisation du mélangeur, le circuit électronique des premiers moyens comporte une thermistance disposée dans la tubulure d'admission d'air du carburateur, au voisinage de celui-ci, ledit circuit électronique actionnant un électro-aimant commandant l'ouverture du clapet commandable lorsque la température de la thermistance atteint sa valeur de seuil, et le circuit électronique des seconds moyens comporte une thermistance disposée en un lieu où règne une température représentative de la température du moteur, ledit circuit électronique actionnant un électro-aimant commandant l'ouverture d'un clapet pouvant mettre le volume fermé à la pression atmosphérique lorsque la température de la thermistance atteint sa valeur de seuil.

La présente invention a également pour objet un mélangeur d'air d'admission à commande à dépression à pilotage automatique pour un moteur à combustion interne à carburateur, comprenant un boîtier muni d'une tubulure d'entrée d'air frais, d'une tubulure d'entrée d'air chaud, d'une tubulure de sortie d'air mélangé et d'un volet susceptible de fermer l'arrivée d'air chaud ou l'arrivée d'air frais et d'occuper toutes les positions intermédiaires, ledit volet étant actionné par une tige faisant partie d'un organe à dépression constituée d'une capsule éliminant un volume fermé par une membrane souple et poussée par un ressort, ladite tige étant solidaire de la membrane, l'intérieur dudit volume étant mis en communication avec la tubulure d'admission d'air du moteur à travers un clapet commandable, et comprenant des premiers moyens pour maintenir ouvert le clapet commandable lorsque la température de l'air d'admission de l'air au carburateur atteint une valeur de seuil et des seconds moyens pour mettre le volume à la pression atmosphérique lorsqu'une température représentative de la température du moteur atteint une valeur de seuil, caractérisé en ce que les premiers et les seconds moyens comprennent un unique circuit électronique comportant une unique thermistance placée dans la tubulure d'admission d'air en amont et au voisinage du carburateur.

Les particularités et avantages de l'invention apparaîtront à la description donnée ci-après d'un mode préféré de réalisation en référence au dessin annexé dans lequel:

– la figure 1 est une vue schématique en coupe du mélangeur selon l'invention,

– la figure 2 est une vue en coupe selon la ligne II–II de la figure 1,

– la figure 3 est une vue en coupe selon la ligne III–III de la figure 1,

– la figure 4 est un schéma d'un des circuits électroniques du premier mode de réalisation du mélangeur de l'invention,

– la figure 5 est une vue schématique d'un ensemble moteur à explosion comportant un mélangeur selon le premier mode de réalisation,

– la figure 6 est un schéma de l'unique circuit électronique du deuxième mode de réalisation du mélangeur,

– la figure 7 est une vue schématique d'un ensemble moteur à explosion comportant un mélangeur selon le deuxième mode de réalisation.

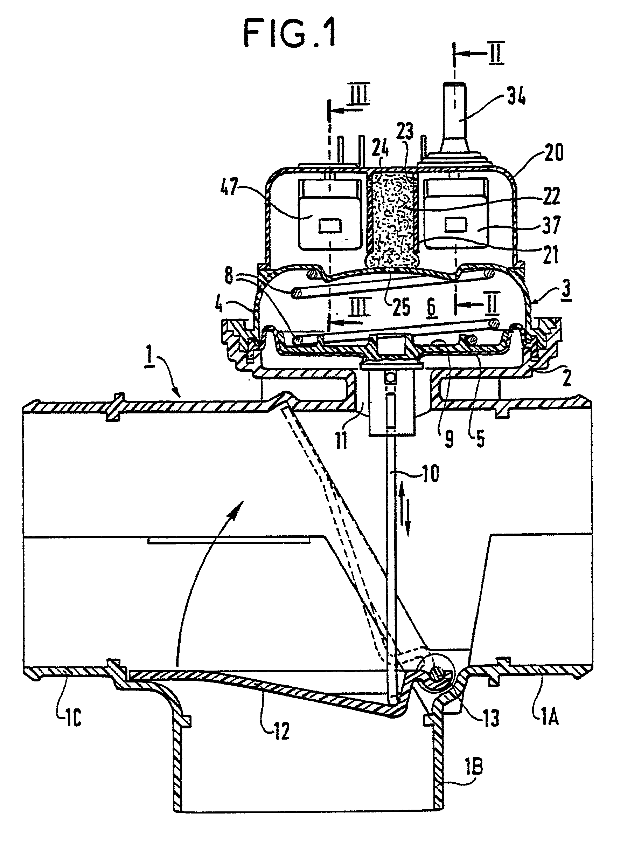

Dans la figure 1, la référence 1 désigne le corps du mélangeur constitué d'un boîtier moulé en matière plastique.

Le boîtier comprend une portion cylindrique 1A, constituant une arrivée d'air frais, une portion cylindrique 1B d'arrivée d'air chaud (en provenance par exemple d'un échangeur situé près du collecteur d'échappement de l'automobile) et une sortie 1C d'air mélangé, reliée au carburateur.

Le boîtier comporte également une couronne 2 sur laquelle est fixé, par soudage, un organe à dépression 3.

Cet organe comprend une capsule 4 fermée par une membrane 5.

La référence 6 désigne le volume délimité par la capsule et la membrane.

Un ressort 8, placé dans le volume 6, tend à s'opposer au mouvement de la membrane qui se déplace, en réduisant le volume 6, lorsque la pression décroît dans ce volume.

A la membrane est fixée une pièce moulée 9 portant une tige 10 qui traverse le corps du mélangeur par un orifice 11. Une extrémité de cette tige est fixée à un clapet 12 pivotant autour d'un axe 13.

Lorsque la même pression existe dans le volume 6 et dans le corps du mélangeur, la membrane 5 est poussée par le ressort (volume 6 maximum). La tige 10 pousse alors le clapet dans la position en traits pleins de la figure 1, fermant ainsi l'arrivée d'air chaud.

Si au contraire la dépression est élevée dans le volume 6, la membrane se déplace contre l'action du ressort et entraîne la tige de manière à obturer l'arrivée d'air froid (position en tiretés de la figure 1). Enfin, il existe des valeurs de la dépression dans la capsule, correspondant à diverses charges du moteur, pour lequel le clapet occupe une position intermédiaire en dosant judicieusement les proportions d'air chaud et d'air froid.

Pour cela, on a défini par le calcul et l'expérimentation les caractéristiques du ressort 8, selon les différents moteurs à équiper.

Selon l'invention, le mélangeur comprend des moyens pour mettre le volume 6 à la dépression de la tubulure d'admission du moteur lorsque la température de l'air d'admission au carburateur atteint une première valeur de seuil donnée T1, ainsi que des moyens pour mettre le volume 6 à la pression atmosphérique lorsque la température du moteur atteint une valeur T2 (supérieure à T1).

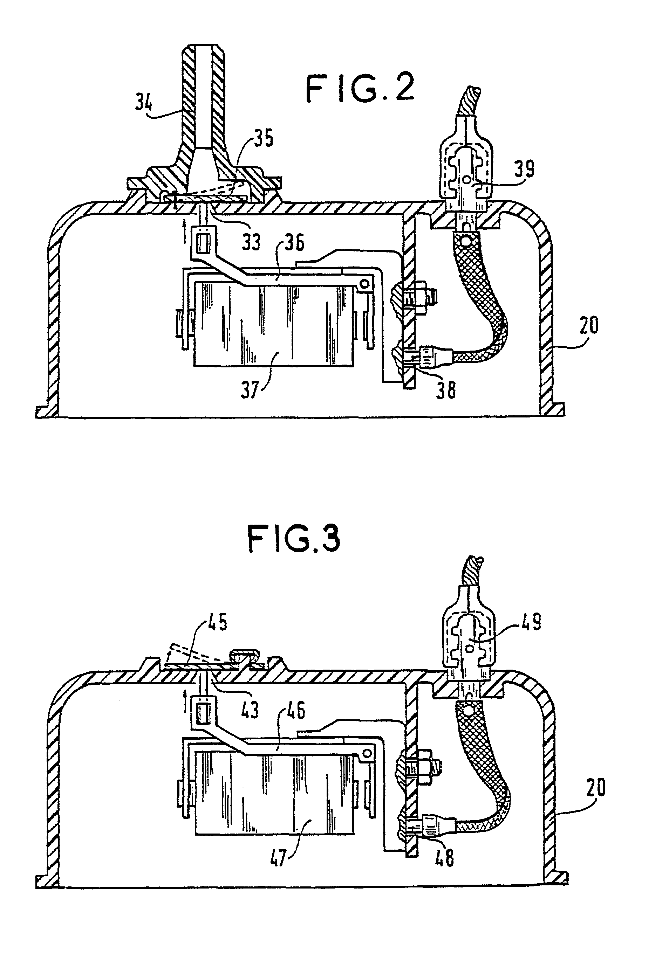

Ces moyens sont constitués de la manière décrite ci-après. Un volume 20 est réalisé au moyen d'une pièce en forme de cylindre ou de coupole soudée à la capsule. La coupole comprend une cheminée centrale 21 remplie d'un produit 22 filtrant (mousse par exemple), et deux orifices 33 et 43 (voir figures 2 et 3 respectivement).

L'orifice 33 est prolongé par une portion tubulaire 34 permettant sa liaison avec la tubulure 52 d'admission du moteur. L'orifice 33 est obturé au moyen d'un clapet anti-retour 35 dont l'ouverture est commandée par la palette 36 d'un électro-aimant 37. L'électro-aimant est alimenté, à travers un circuit décrit plus loin, par des bornes telle que 38 et des cosses telle que 39.

De même l'orifice 43 est obturé par un clapet anti-retour 45 dont l'ouverture est commandée par la palette 46 d'un électro-aimant 47 relié, par des prises 48 et des cosses 49 à un circuit électronique décrit plus loin.

En revenant à la figure 1 on voit que la cheminée porte des orifices 23 et 24 et que la capsule porte, au-dessous de la cheminée 21, un orifice 25.

De la sorte, si le clapet 35 est ouvert, la communication peut s'établir entre l'intérieur du tube 34 et le volume 6, à travers l'orifice 23, le filtre 22 et l'orifice 25.

De même, si le clapet 45 est ouvert, la pression atmosphérique s'établit dans le volume 6 par l'orifice 24, le filtre 22 et l'orifice 25.

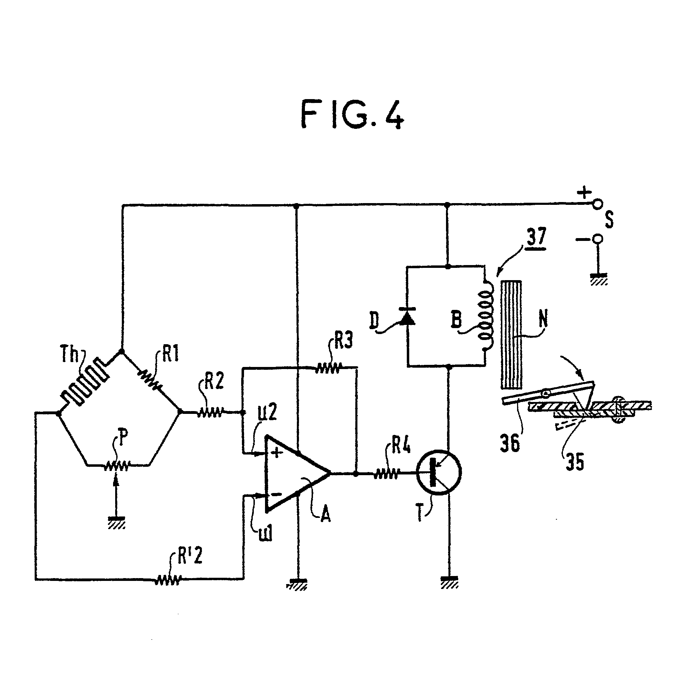

Chacun des électro-aimants 37 et 47 est actionné par un circuit tel que celui représenté dans la figure 4.

Ce circuit, actionnant sur cette figure l'électro-aimant 37, comprend un pont constitué d'une résistance R1, d'une thermistance CTN et d'un potentiomètre P. Une diagonale du pont est alimentée par une source de tension continue S (fournie par la batterie de l'automobile de 10 à 14 volts par exemple).

Les autres diagonales du pont sont reliées par ses résistances R2, et R'2 aux entrées d'un amplificateur opérationnel A monté en comparateur et qui attaque en sortie, par une résistance R4 la base d'un transistor T dont l'émetteur est relié à une extrémité de la bobine B de l'électro-aimant 37. Une résistance R3 règle l'inertie du système.

L'autre extrémité de la bobine est reliée au pôle positif de la source de tension S.

Une diode de protection D est placée en parallèle sur la bobine B.

Le noyau N de l'électro-aimant attire une palette 36 dont le pivotement provoque l'ouverture du clapet 35.

Le fonctionnement du circuit est le suivant, en désignant par U2 la tension à l'entrée positive de l'amplificateur et par U1 la tension à l'entrée négative. Si U2 est supérieure ou égale à U1, la tension de sortie de l'amplificateur appliquée à la base du transistor T bloque ce dernier.

Si U2 devient inférieur à U1, le transistor T se débloque et la bobine B est mise sous tension, attirant la palette et ouvrant le clapet.

Le différence U2, U1 est une fonction de la valeur de la résistance de la thermistance Th, elle-même fonction de la température du milieu dans laquelle elle est placée.

On voit que par le simple déplacement du curseur du potentiomètre P, on peut ajuster l'équilibre du pont pour une valeur donnée de la température de la thermistance CTN.

Les circuits de commande des deux électro-aimants 37 et 47 dont est muni le mélangeur de l'invention sont disposés sur des cartes à circuit imprimé placées par exemple dans le tableau de bord de l'automobile.

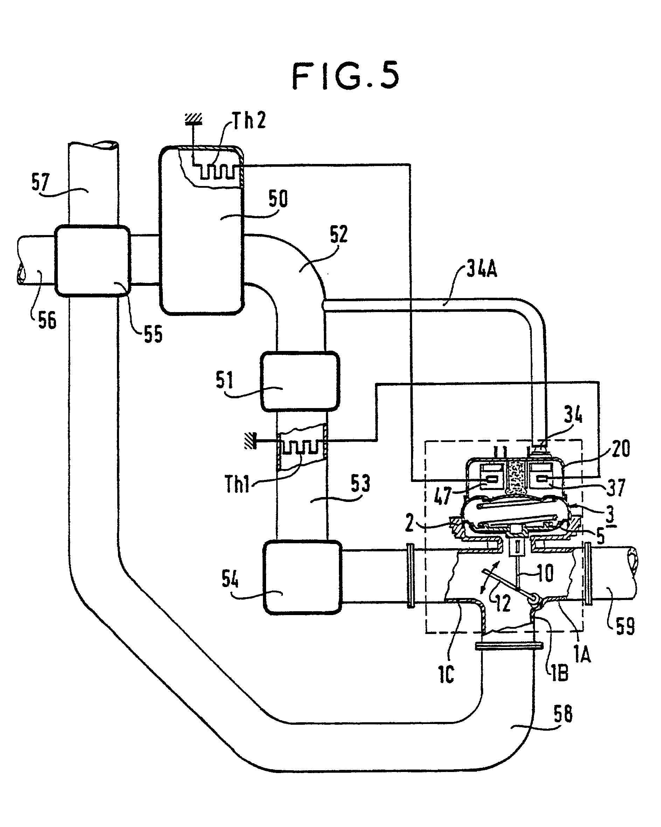

Comme représenté en figure 5 la thermistance Th1 du circuit du clapet 37 est placée à l'entrée du carburateur. Elle est choisie et le pont est réglé pour obtenir un fonctionnement du relais lorsque la température environnant cette thermistance Th1 atteint une température T1 égale par exemple à 20°C.

La thermistance Th2 du circuit du clapet 47 est placée soit dans la tubulure d'admission d'air au carburateur, soit dans le carter à huile à moteur, soit dans l'eau de refroidissement de la culasse, où en tout autre lieu où règne une température représentative de celle du moteur.

La thermistance Th2 du circuit du clapet 47 est choisie et le circuit est réglé pour que l'équilibre du pont soit atteint à une température T2 égale par exemple à 30° si la thermistance est dans la tubulure d'admission d'air au carburateur, à 70° si elle est dans l'eau de refroidissement et à 80° si elle est dans l'huile du carter.

Ces valeurs de température sont bien entendu données à titre indicatif et non limitatif.

Le carburateur 51 est relié au bloc-moteur 50 par une tubulure d'admission 52.

La sortie 1C du mélangeur est relié à un filtre à air 54 dont la sortie alimente le carburateur par une tubulure 53.

Le collecteur d'échappement est désigné par la référence 55 et son extrémité par 56.

Une prise d'air extérieur 57 passe autour du collecteur d'échappement ; l'air réchauffé est amené par une tubulure 58 à l'entrée 1B du mélangeur. La référence 59 désigne une prise d'air extérieur reliée à l'entrée 1A du mélangeur.

La tubulure 34A relie la sortie 34 du mélangeur à la tubulure d'admission 52 du moteur.

Le fonctionnement du mélangeur selon le premier mode de réalisation est le suivant :

Avant le démarrage du moteur, les deux clapets 35, 45 sont fermés.

Au démarrage, par exemple avec une température extérieure égale à 10° (inférieure à T1 supposé égal à 20°), la dépression de la tubulure d'admission 34A est transmise dans le volume 6 de la capsule par le clapet 35 qui s'ouvre automatiquement.

Le membrane comprime le ressort 8 et la tige 10 entraîne le clapet, obturant complètement l'arrivée d'air froid (position en tiretés du clapet de la figure 1).

A ce moment, même si la dépression de la tubulure d'admission du moteur diminue fortement, le clapet anti-retour 35 obture la chambre et empêche toute diminution de la dépression d'atteindre le volume 6. Dès lors, la position du volet, obturant l'arrivée d'air froid, est inchangée.

Ces dispositions permettent une rapide montée en température de l'air admis au carburateur par les tubulures 1C et 53.

Lorsque la température de l'air d'admission au carburateur atteint la valeur T1, la variation de résistance de la première thermistance entraîne le déséquilibre du pont et commande le fonctionnement de l'électro-aimant 37 dont la palette bascule en maintenant le clapet 35 ouvert.

Le passage de la dépression entre la tubulure 52 d'admission d'air au moteur et le volume 6 est alors libre quelle que soit la valeur de la dépression.

Il en résulte que la position du volet sera directement fonction de l'importance de la dépression (dans les limites calculées pour la fabrication du ressort 8) c'est-à-dire de la position de l'accélérateur.

Lorsque la température de l'huile du carter atteint la température T2 (80° dans l'exemple choisi), la variation de valeur de la thermistance T2 entraîne le déséquilibre du pont et commande le fonctionnement de l'électro-aimant 47, qui ouvre le clapet 45. La mise à l'atmosphère du volume 6, résultant de l'ouverture du clapet 45, provoque le déplacement de la tige et le basculement du volet 10 qui obture le conduit d'air chaud 1B.

Le moteur a atteint sa température normale de fonctionnement et s'alimente en air frais extérieur uniquement par le conduit 1A.

Après l'arrêt du moteur le refroidissement de la thermistance ramène les deux clapets 35 et 45 à leur état initial de fermeture.

L'avantage du pilotage électronique, outre la précision des températures données, est de permettre un choix dans l'emplacement des thermistances et de pouvoir régler les deux températures à n'importe quelles valeurs, en rapport direct avec chaque type de moteur suivant le meilleur rendement (cela sans changer les composants électroniques).

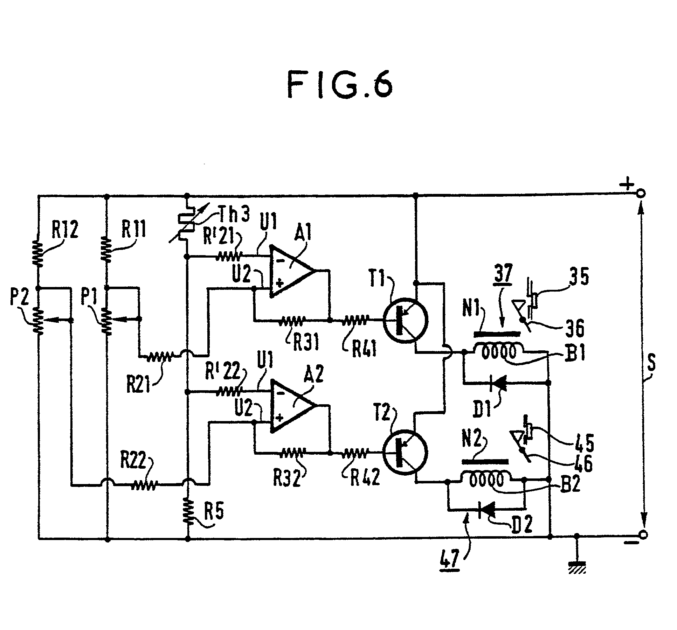

Dans la figure 6 représentant le deuxième mode de réalisation, l'électro-aimant 37 est composé d'un noyau N1, d'une bobine B1 et d'une diode de protection D1, le noyau N1 attirant la palette 36 dont le pivotement provoque l'ouverture du clapet 35, et l'électro-aimant 47 est composé d'un noyau N2, d'une bobine B2 et d'une diode de protection D2, le noyau N2 attirant la palette 46 dont le pivotement provoque l'ouverture du clapet 45.

Les deux bobines B1, B2 sont chacune branchée en série avec un transistor respectivement T1, T2, chaque transistor étant relié à la sortie d'un amplicateur opérationnel respectivement A1, A2.

Les entrées positives de ces deux amplificateurs opérationnels sont reliées à un pont diviseur respectivement R11, P1 ; R12, P2 tandis que les deux entrées négatives sont reliées au point milieu d'un troisième pont diviseur constitué par la thermistance Th3 et une résistance R5.

Pour chaque amplificateur, on désigne par U2 la tension à l'entrée positive et par U1 la tension à l'entrée négative.

Si U2 est supérieure ou égale à U1, la tension de sortie de l'amplicateur, appliquée à la base d'un transistor T, bloque ce dernier et la bobine non alimentée n'attire pas la palette qui laisse alors le clapet correspondant fermé.

Si U2 devient inférieure à U1, le transistor T se débloque et la bobine mise sous tension attire la palette qui ouvre le clapet correspondant.

La tension U1 est fonction de la valeur de la résistance de la thermistance Th3, elle-même fonction de la température du milieu dans laquelle elle est placée, tandis que la tension U2 est réglée par le simple déplacement du curseur du potentiomètre P1 ou P2.

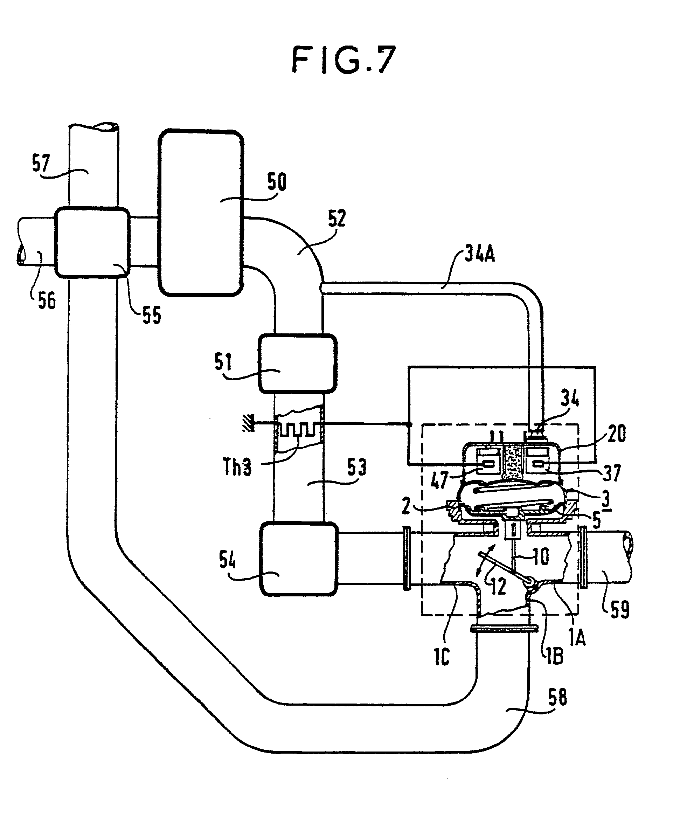

La figure 7 montre le même ensemble moteur que la figure 5, mais les deux thermistances Th1, Th2 de la figure 5 sont ici remplacées par une seule thermistance Th3 placée dans la tubulure 53 juste en amont du carburateur 51.

Le fonctionnement du mélangeur selon le deuxième mode de réalisation est le suivant:

Avant le démarrage du moteur, les deux clapets 35, 45 sont fermés.

Au démarrage, par exemple avec une température extérieure égale à 10° (inférieure à la première valeur de seuil supposée égal à 20°), la dépression de la tubulure d'admission 34A ouvre automatiquement le clapet 35.

Le membrane comprime le ressort et la tige 10 entraîne le volet 12 obturant complètement l'arrivée d'air froid.

A ce moment, même si la dépression de la tubulure d'admission du moteur diminue fortement, le clapet anti-retour 35 obture la chambre et empêche toute diminution de la dépression d'atteindre le volume de la capsule. Dès lors, la position du volet 12 obturant l'arrivée d'air froid, est inchangée.

Ces dispositions permettent une rapide montée en température de l'air admis au carburateur par les tubulures 1C et 53.

Lorsque la température de l'air d'admission au carburateur atteint la première valeur de seuil T1, la variation de résistance de la thermistance entraîne le déblocage du premier transistor qui alimente alors l'électro-aimant 37 dont la palette bascule et ouvre le clapet 35. Le passage entre la tubulure 52 d'admission d'air et le volume de la capsule est alors libre quelle que soit la valeur de la dépression. Il en résulte que la position du volet sera directement fonction de l'importance de la dépression (dans les limites calculées pour la fabrication du ressort 8) c'est-à-dire de la position de l'accélérateur.

Lorsque la température de l'air d'admission au carburateur atteint la deuxième valeur de seuil, la variation de résistance de la thermistance entraîne le déblocage du deuxième transistor qui alimente alors l'électro-aimant 47 dont la palette bascule et ouvre le clapet 45. La mise à l'atmosphère du volume de la capsule, résultant de l'ouverture du clapet 45, provoque le déplacement de la tige et le basculement du volet 12 qui obture le conduit d'air chaud 1B.

Le moteur a atteint sa température normale de fonctionnement et s'alimente en air frais extérieur uniquement par le conduit 1A.

Après l'arrêt du moteur le refroidissement de la thermistance ramène les deux clapets 35 et 45 à leur état initial de fermeture.

## Revendications

1. Mélangeur d'air d'admission à commande à dépression à pilotage automatique pour un moteur à combustion interne à carburateur, comprenant un boîtier (1) muni d'une tubulure d'entrée d'air frais (1A), d'une tubulure d'entrée d'air chaud (1B), d'une tubulure de sortie (1C) d'air mélangé et d'un volet (12) susceptible de fermer l'arrivée d'air chaud ou l'arrivée d'air frais et d'occuper toutes les positions intermédiaires, ledit volet étant actionné par une tige (10) faisant partie d'un organe à dépression constituée d'une capsule (3) délimitant un volume (6) fermé par une membrane souple (9) et poussée par un ressort (8), ladite tige étant solidaire de la membrane, l'intérieur dudit volume étant mis en communication avec la tubulure (52) d'admission d'air du moteur à travers un clapet commandable (35), et comprenant des premiers moyens (37) pour maintenir ouvert le clapet commandable (35) lorsque la température de l'air d'admission d'air au carburateur atteint une valeur de seuil, et des seconds moyens (47) pour mettre le volume (6) à la pression atmosphérique lorsqu'une température représentative de la température du moteur atteint une valeur de seuil, caractérisé en ce que les premiers et les seconds moyens comprennent chacun un circuit électronique comportant une thermistance.

2. Mélangeur selon la revendication 1, caractérisé en ce que le circuit électronique des premiers moyens comporte une thermistance (Th1) disposée dans la tubulure (53) d'admission d'air du carburateur (51), au voisinage de celui-ci, ledit circuit électronique actionnant un électro-aimant (37) commandant l'ouverture du clapet commandable (35) lorsque la température de la thermistance atteint sa valeur de seuil.

3. Mélangeur selon la revendication 1, caractérisé en ce que le circuit électronique des seconds moyens comporte une thermistance (Th2) disposée en un lieu où règne une température représentative de la température du moteur, ledit circuit électronique actionnant un électro-aimant (47) commandant l'ouverture d'un clapet (45) pouvant mettre le volume fermé (6) à la pression atmosphérique lorsque la température de la thermistance atteint sa valeur de seuil.

4. Mélangeur selon l'une des revendications 2 ou 3, caractérisé en ce que chaque circuit électronique comprend un pont dans lequel est insérée la thermistance (Th1, Th2), une diagonale du pont étant alimentée par une source de tension continue, l'autre diagonale étant reliée à un amplificateur opérationnel monté en comparateur, dont la sortie polarise un transistor en série dans le circuit de la bobine de l'électro-aimant (37, 47).

5. Mélangeur selon la revendication 4, caractérisé en ce que le pont comporte un potentiomètre dont le curseur constitue un sommet du pont, permettant l'ajustement de la valeur de seuil.

6. Mélangeur d'air d'admission à commande à dépression à pilotage automatique pour un moteur à combustion interne à carburateur, comprenant un boîtier (1) muni d'une tubulure d'entrée d'air frais (1A), d'une tubulure d'entrée d'air chaud (1B), d'une tubulure de sortie (1C) d'air mélangé et d'un volet (12) susceptible de fermer l'arrivée d'air chaud ou l'arrivée d'air frais et d'occuper toutes les positions intermédiaires, ledit volet étant actionné par une tige (10) faisant partie d'un organe à dépression constituée d'une capsule (3) délimitant un volume (6) fermé par une membrane souple (9) et poussée par un ressort (8), ladite tige étant solidaire de la membrane, l'intérieur dudit volume étant mis en communication avec la tubulure (52) d'admission d'air du moteur à travers un clapet commandable (35), et comprenant des premiers moyens (37) pour maintenir ouvert le clapet commandable (35) lorsque la température de l'air d'admission d'air au carburateur atteint une valeur de seuil, et des seconds moyens (47) pour mettre le volume (6) à la pression atmosphérique lorsqu'une température représentative de la température du moteur atteint une valeur de seuil, caractérisé en ce que les premiers et les seconds moyens comprennent un unique circuit électronique comportant une unique thermistance (Th3) placée dans la tubulure d'admission d'air, en amont et au voisinage du carburateur (51).

7. Mélangeur selon la revendication 6, caractérisé en ce que le circuit électronique comporte trois ponts diviseurs, un premier pont diviseur (R11, P1) et un second pont diviseur (R12, P2) permettant de régler respectivement la tension de polarisation des entrées positives de deux amplificateurs opérationnels (A1, A2) montés en comparateur, un troisième pont diviseur comportant l'unique thermistance (Th3) et une résistance (R5), ce troisième pont ayant son point milieu relié aux entrées négatives desdits amplificateurs, la sortie de chaque amplificateur polarisant un transistor (T1, T2) monté en série dans le circuit de la bobine de chaque électro-aimant (37, 47).

8. Mélangeur selon l'une des revendications 1 à 7, caractérisé en ce que les clapets commandables (35, 45) et les électro-aimants (37, 47) sont disposés dans une coupole (20) fixée de manière étanche à ladite capsule (3), l'intérieur de la coupole communiquant avec l'intérieur de la capsule par un orifice (25) de celle-ci.

9. Mélangeur selon la revendication 8, caractérisé en ce que la coupole (20) comprend une cheminée (23) au droit dudit orifice (25), rempli de matière filtrante (22) agencé pour filtrer l'air pénétrant dans la capsule (3).

10. Mélangeur selon l'une des revendications 1 à 9, caractérisé en ce que les circuits électroniques sont disposés sur au moins une carte placée dans le tableau de bord de l'automobile.

**Claims**

1. An automatically-actuated vacuum-controlled intake air mixer for an internal combustion engine having a carburettor, the mixer comprising a housing (1) provided with a cold air inlet duct (1A), a hot air inlet duct (1B), a mixed air outlet duct (1C), and a flap (12) suitable for closing the hot air inlet or the cold air inlet and for occupying any intermediate position, said flap being actuated by a rod (10) forming a part of a vacuum member constituted by a capsule (3) delimiting a volume (6) which is closed by a flexible membrane (9) and which is biased by a spring (8), said rod being fixed to the membrane, with the inside of said volume being put into communication with the engine air intake duct (52) via a controllable valve member (35), and including first means (37) for holding the controllable valve member (35) open when the air temperature of the air intake to the carburettor reaches a threshold value, and second means (47) for putting the volume (6) to atmospheric pressure when a temperature representative of the engine temperature reaches a threshold value, the mixer being characterized in that each of the first and second means includes an electronic circuit including a thermistor.

2. A mixer according to claim 1, characterized in that the electronic circuit of the first means includes a thermistor (Th1) disposed in the air intake duct (53) of the carburettor (51), in the vicinity of the carburettor, said electronic circuit actuating an electromagnet (37) to open the controllable valve member (35) when the temperature of the thermistor reaches its threshold value.

3. A mixer according to claim 1, characterized in that the electronic circuit of the second means includes a thermistor (Th2) disposed in a location subjected to a temperature representative of the engine temperature, said electronic circuit actuating an electromagnet (47) to open a valve member (45) capable of putting the closed volume (6) to atmospheric pressure when the temperature of the thermistor reaches its threshold value.

4. A mixer according to claim 2 or 3, characterized in that the each electronic circuit comprises a bridge in which the thermistor (Th1, Th2) is inserted, with one diagonal of the bridge being fed by a source of D.C. voltage, and with the other diagonal being connected to an operational amplifier connected as a comparator, with the output thereof biasing a transistor connected in series in the coil circuit of the electromagnet (37, 47).

5. A mixer according to claim 4, characterized in that the bridge includes a potentiometer whose cursor constitutes one of the corners of the bridge, thereby enabling the threshold value to be adjusted.

6. An automatically-actuated vacuum-controlled intake air mixer for an internal combustion engine having a carburettor, the mixer comprising a housing (1) provided with a cold air inlet duct (1A), a hot air inlet duct (1B), a mixed air outlet duct (1C), and a flap (12) suitable for closing the hot air inlet or the cold air inlet and for occupying any intermediate position, said flap being actuated by a rod (10) forming a part of a vacuum member constituted by a capsule (3) delimiting a volume (6) which is closed by a flexible membrane (9) and which is biased by a spring (8), said rod being fixed to the membrane, with the inside of said volume being put into communication with the engine air intake duct (52) via a controllable valve member (35), and including first means (37) for holding the controllable valve member (35) open when the air temperature of the air intake to the carburettor reaches a threshold value, and second means (47) for putting the volume (6) to atmospheric pressure when a temperature representative of the engine temperature reaches a threshold value, the mixer being characterized in that the first and second means comprise a single a electronic circuit including a single thermistor (Th3) placed in the air intake duct, upstream from and in the vicinity of the carburettor (51).

7. A mixer according to claim 6, characterized in that the electronic circuit includes three voltage-dividing bridges, a first divider bridge (R11, P1) and a second divider bridge (R12, P2) serving respectively to adjust the bias voltages applied to the positive inputs of two operational amplifiers (A1, A2) connected as comparators, and a third divider bridge including the sole thermistor (Th3) and a resistor (R5), said third bridge having its midpoint connected to the negative inputs of said amplifiers, with the output from each amplifier biasing a transistor (T1, T2) connected in series in the coil circuit of each of the electromagnets (37, 47).

8. A mixer according to any one of claims 1 to 7, characterized in that the controllable valve members (35, 45) and the electromagnets (37, 47) are disposed in a bowl (20) fixed in airtight manner on said capsule (3), with the inside of the bowl communicating with the inside of the capsule via an orifice (25) therein.

9. A mixer according to claim 8, characterized in that the bowl (20) includes a chimney (23) level with said orifice (25), said chimney being filled with filter material (52) arranged to filter the air which penetrates into the capsule (3).

10. A mixer according to any one of claims 1 to 9, characterized in that the electronic circuits are disposed on at least one card placed in the dashboard of the car.

## Patentansprüche

1. Automatisch betätigter unterdruckgesteuerter Ansaugluftmischer für einen Verbrennungsmotor mit Vergaser, der ein Gehäuse (1), das mit einem Frischlufteinlaßstutzen (1A), einem Heißlufteinlaßstutzen (1B), einem Mischluftauslaßstutzen (1C) und einer Klappe (12) versehen ist, die den Heißlufteinlaß oder den Frischlufteinlaß verschließen und alle Zwischenstellungen einnehmen kann, wobei die Klappe durch eine Stange (10) betätigt wird, die Teil eines Unterdruckorgans ist, welches aus einer Kapsel (3) besteht, die einen von einer biegsamen und von einer Feder (8) unter Druck gesetzten Membran (9) verschlossenen Raum (6) begrenzt, wobei die Stange fest mit der Membran verbunden ist, das Innere des Raums über ein steuerbares Ventil (35) mit dem Lufteinlaßstutzen (52) des Motors verbunden wird, und erste Mittel (37), um das steuerbare Ventil (35) offen zu halten, wenn die Lufttemperatur der Luftzuleitung zum Vergaser einen Schwellwert erreicht, und zweite Mittel (47) aufweist, um den Raum (6) auf Atmosphärendruck zu bringen, wenn einen repräsentative Temperatur des Motors einen Schwellwert erreicht, dadurch gekennzeichnet, daß die ersten und zweiten Mittel je einen elektronischen Kreis mit einem Thermistor aufweisen.

2. Mischer nach Anspruch 1, dadurch gekennzeichnet, daß der Elektronikkreis der ersten Mittel einen im Lufteinlaßstutzen (53) des Vergasers (51) in der Nähe des Vergasers angeordneten Thermistor (Th1) aufweist, wobei der Elektronikkreis einen Elektromagneten (37) betätigt, der die Öffnung des steuerbaren Ventils (35) bewirkt, wenn die Temperatur des Thermistors ihren Schwellwert erreicht.

3. Mischer nach Anspruch 1, dadurch gekennzeichnet, daß der Elektronikkreis der zweiten Mittel einen an einer Stelle angeordneten Thermistor (Th2) aufweist, wo eine für die Motortemperatur repräsentative Temperatur herrscht, wobei der Elektronikkreis einen Elektromagneten (47) betätigt, der die Öffnung eines Ventils (45) steuert, daß den geschlossenen Raum (6) auf Atmosphärendruck bringen kann, wenn die Temperatur des Thermistors ihren Schwellwert erreicht.

4. Mischer nach einem der Ansprüche 2 oder 3, dadurch gekennzeichnet, daß jeder Elektronikkreis eine Brücke aufweist, in die der Thermistor (Th1, Th2) eingefügt ist, wobei eine Diagonale der Brücke aus einer Gleichspannungsquelle gespeist wird, während die andere Diagonale mit einem als Komparator geschalteten Operationsverstärker verbunden ist, dessen Ausgang einen Transistor vorspannt, der in Reihe im Kreis der Wicklung des Elektromagneten (37, 47) angeordnet ist.

5. Mischer nach Anspruch 4, dadurch gekennzeichnet, daß die Brücke ein Potentiometer aufweist, dessen Abgriff eine Ecke der Brücke bildet, und das die Einstellung des Schwellwerts ermöglicht.

6. Automatisch betätigter unterdruckgesteuerter Ansaugluftmischer für einen Verbrennungsmotor mit Vergaser, der ein Gehäuse (1), das mit einem Frischlufteinlaßstutzen (1A), einem Heißlufteinlaßstutzen (1B), einem Mischluftauslaßstutzen (1C) und einer Klappe (12) versehen ist, die den Heißlufteinlaß oder den Frischlufteinlaß verschließen und alle Zwischenstellungen einnehmen kann, wobei die Klappe durch eine Stange (10) betätigt wird, der Teil eines Unterdruckorgans ist, welches aus einer Kapsel (3) besteht, die einen von einer biegsamen und von einer Feder (8) unter Druck gesetzten Membran (9) verschlossenen Raum begrenzt, wobei die Stange fest mit der Membran verbunden ist, das Innere des Raums über ein steuerbares Ventil (35) mit dem Lufteinlaßstutzen (52) des Motors verbunden wird, und erste Mittel (37), um das steuerbare Ventil (35) offen zu halten, wenn die Lufttemperatur der Luftzuleitung zum Vergaser einen Schwellwert erreicht, und zweite Mittel (47) aufweist, um den Raum (6) auf Atmosphärendruck zu bringen, wenn eine repräsentative Temperatur des Motors einen Schwellwert erreicht, dadurch gekennzeichnet, daß die ersten und zweiten Mittel einen einzigen Elektronikkreis aufweisen, der einen einzigen Thermistor (Th3) enthält, welcher in dem Lufteinlaßstutzen vor dem Vergaser (51) und in dessen Nähe angeordnet ist.

7. Mischer nach Anspruch 6, dadurch gekennzeichnet, daß der Elektronikkreis drei Teilerbrücken aufweist, wobei eine erste Teilerbrücke (R11, P1) und eine zweite Teilerbrücke (R12, P2) es ermöglichen, je die Vorspannung der positiven Eingänge zweier als Komparator geschalteter Operationsverstärker (A1, A2) zu regeln, eine dritte Teilerbrücke den einzigen Thermistor (Th3) und einen Widerstand (R5) enthält, wobei der Zwischenabgriff dieser dritten Brücke mit den negativen Eingängen der Verstärker verbunden ist und der Ausgang jedes Verstärkers einen Transistor (T1, T2) polarisiert, der in Reihe mit der Wicklung jedes Elektromagneten (37, 47) angeordnet ist.

8. Mischer nach einem der Ansprüche 1 bis 7, dadurch gekennzeichnet, daß die steuerbaren Ventile (35, 45) und die Elektromagneten (37, 47) in einer Kuppel (20) angeordnet sind, die dicht mit der Kapsel (3) verbunden ist, wobei das Innere der Kuppel mit dem Inneren der Kapsel über eine Öffnung (25) der Kuppel verbunden ist.

9. Mischer nach Anspruch 8, dadurch gekennzeichnet, daß die Kuppel (20) einen Schacht (23) gegenüber der Öffnung (25) aufweist, der mit Filtermaterial (22) gefüllt ist, das so ausgebildet ist, daß es die in die Kapsel (3) eindringende Luft filtert.

10. Mischer nach einem der Ansprüche 1 bis 9, dadurch gekennzeichnet, daß die Elektronikkreise auf mindestens einer Karte angeordnet sind, die sich auf der Instrumententafel des Kraftfahrzeuges befindet.

# FIG.1

# FIG.2

# FIG.3

# FIG. 4

# FIG.5

# FIG.6

# FIG.7